# EUROPEAN PATENT APPLICATION

(11) **EP 4 715 916 A1**
(43) Date of publication of application: **25.03.2026**
(21) Application number: 25191488.3
(22) Date of filing: 24.07.2025
(51) Int. Cl.: H01M 10/04, H01M 50/536, H01M 50/538, H01M 50/627

(54) **SECONDARY BATTERY, BATTERY PACK AND ELECTRONIC DEVICE**

(30) Priority: 18.09.2024 CN 202422277884 U
(71) Applicant: AESC Japan Ltd., Yokohama-Shi, Kanagawa 220-0012 (JP)
(72) Inventor: QIAN, Jia, Jiangyin City, Wuxi City, 214443 (CN)
(74) Representative: Becker, Eberhard

(57) **Abstract**

A secondary battery (100), a battery pack (10), and an electronic device (1) are provided. The secondary battery (100) includes a casing (110), an electrode assembly (120), and a current-collecting member (140). The casing (110) includes an end wall (111) provided with a first filling hole (115). The electrode assembly (120) accommodated in the casing (110) includes a first electrode sheet (123), a second electrode sheet (121), and a separator (122) stacked and wound to form a wound structure (126). An end portion of the first electrode sheet (123) includes an uncoated foil region (1233) extending from the separator (122) in an axial direction of the electrode assembly (120) and including a first cut segment (12331) and an uncut segment (12332), and the uncut segment (12332) is bent to form a tab (124). The current-collecting member (140) connected to the tab (124) includes a second filling hole (143).

## Description

### BACKGROUND

### Technical Field

The disclosure relates to the technical field of batteries, and in particular, relates to a secondary battery, a battery pack, and an electronic device.

### Description of Related Art

Cylindrical batteries have been widely applied to many aspects of modern society due to their advantages such as high energy efficiency and long cycle life. The electrode assembly is usually a wound structure. Tabs are arranged at both ends of the electrode assembly, and the outer sides of the tabs are electrically connected to current-collecting members. Due to the blocking of the current-collecting members and tabs, great challenges are brought to the electrolyte injection and electrode assembly wetting during the manufacturing process of cylindrical batteries. The production efficiency of cylindrical batteries is limited and the performance of batteries is also affected as a result. Therefore, improving the wetting efficiency of electrolyte is a technical problem that needs to be overcome in this field.

### SUMMARY

The disclosure provides a secondary battery, a battery pack, and an electronic device to improve the technical problem of low wetting efficiency of electrolyte.

To achieve the above and other related purposes, the disclosure provides a secondary battery, a battery pack, and an electronic device. The secondary battery includes a casing, an electrode assembly, and a current-collecting member. The casing includes an end wall, and a first filling hole is arranged on the end wall. The electrode assembly is accommodated in the casing and includes a first electrode sheet, a second electrode sheet, and a separator stacked and wound to form a wound structure. An end portion of the first electrode sheet includes an uncoated foil region extending from the separator in an axial direction of the electrode assembly. The uncoated foil region includes a first cut segment close to a winding axis of the wound structure and an uncut segment located radially outside the first cut segment. The uncut segment of the uncoated foil region is bent to form a tab. In a radial direction of the electrode assembly, the first cut segment is wound to form a first annular region, a region covered by the tab is a second annular region, and the first annular region includes a third annular region not covered by the second annular region. The current-collecting member is arranged between the electrode assembly and the end wall, connected to the tab by welding, and includes a second filling hole. When projected in the axial direction of the electrode assembly toward an end surface of the wound structure, a projection of the second filling hole covers the third annular region.

In the above technical solution, the first cut segment of the uncoated foil region is wound to form the first annular region, the uncut segment of the uncoated foil region is bent to form the tab, the region covered by the tab is the second annular region, and the first annular region includes the third annular region not covered by the second annular region. That is, the third annular region is exposed outside the second annular region without being blocked by the tab. Further, the projection of the second filling hole of the current-collecting member covers the third annular region. The projection of the second filling hole covering the third annular region means that the third annular region is exposed within the second filling hole. It is thus achieved that the third annular region is neither blocked by the tab nor blocked by the current-collecting member. Therefore, when the electrolyte is injected from the first filling hole, the electrolyte directly flows into the third annular region exposed within the second filling hole. The electrolyte is directly absorbed by the separator of the third annular region and penetrates radially to wet the electrode assembly during the flowing process, so the wetting efficiency of the electrode assembly is improved through this arrangement. Further, the third annular region is set around the winding axis of the wound structure, so that the uniformity of the electrolyte wetting the electrode assembly radially is improved, and the performance and service life of the battery are enhanced.

In addition, the current-collecting member and the tab are connected by welding. Since there is no tab on the third annular region, exposing the third annular region within the second filling hole effectively prevents miswelds to the third annular region when welding the current-collecting member and the tab, so the risk of burning the separator is reduced.

In the secondary battery provided by an embodiment of the disclosure, the projection of the second filling hole covers the first annular region.

In the above technical solution, the first annular region is formed by winding the first cut segment. Although part of the first annular region after cutting is covered by the tab, compared to the uncut segment, it is still convenient for the electrolyte to flow into the region covered by the tab. The electrolyte can flow from a slit between the tab and the first annular region. Further, the electrolyte is directly absorbed by the separator of the first annular region and penetrates radially to wet the electrode assembly during the flowing process. This arrangement achieves that the first annular region is entirely exposed within the second filling hole, so that the wetting efficiency of the electrode assembly is further improved.

Further, stacking layers of the tab in the portion where the first annular region is covered by the tab are fewer, which is not suitable for welding to the current-collecting member. Therefore, the first annular region being entirely exposed within the second filling hole may effectively prevent miswelds to the region where the tab has fewer stacking layers when welding the current-collecting member and the tab, so the risk of welding through the tab and burning the separator is reduced.

In the secondary battery provided by an embodiment of the disclosure, an inner radius of the second annular region is R1, the wound structure includes a winding hole located at a center, and a radius of the winding hole is R2, where R1-R2≥1mm.

In the above technical solution, an inner circle of the second annular region is an inner circle of the region covered by the tab. The limitation of R1-R2≥1mm achieves that there is an annular region with a width of at least 1mm on an outer periphery of the winding hole that is not blocked by the tab, and the annular region is the third annular region. This arrangement may ensure that the width of the third annular region is not less than 1mm, so that the wetting efficiency of the electrode assembly is further improved, and the performance and service life of the battery are enhanced.

In the secondary battery provided by an embodiment of the disclosure, when projected in the axial direction of the electrode assembly toward the end surface of the wound structure, a projection area of the current-collecting member is S1, and an end surface area of the wound structure is S2, where 0.9S2≥S1≥0.4S2.

In the above technical solution, the setting of S1>0.4S2 achieves that the current-collecting member has a sufficiently large area to be connected to the tab by welding, so as to improve the firmness and reliability of welding between the current-collecting member and the electrode assembly as well as the effect of reducing the internal resistance of the battery. The setting of S1≤0.9S2 ensures that the electrode assembly has an area greater than or equal to 0.1S2 that is not blocked by the current-collecting member and is exposed. Through this setting, on the one hand, the electrolyte can smoothly penetrate into the electrode assembly through the unblocked portions, and on the other hand, gas in an inner portion the electrode assembly can be discharged from the unblocked region. Therefore, the safety performance and comprehensive performance of the battery are improved.

In the secondary battery provided by an embodiment of the disclosure, the current-collecting member includes a plurality of tab connecting portions distributed in a circumferential direction. A transition connection portion is arranged between every two adjacent tab connecting portions, and at least one through hole is arranged on each transition connection portion. In a radial direction of the current-collecting member, a maximum width of the at least one through hole is L, and a radius of the wound structure is R3, where L≥0.5×(R3-R2).

In the above technical solution, the at least one through hole arranged on the transition connection portion can be 1 or multiple. The through hole is the portion on the current-collecting member that does not block the electrode assembly. R3-R2 corresponds to a ring width of the end surface of the wound structure, and L≥0.5×(R3-R2) is further limited. That is, the maximum value of the width of 1 through hole or the sum of widths of multiple through holes on the same transition connection portion is not less than 0.5 times the ring width of the end surface of the wound structure. Through this setting, it is achieved that the electrolyte wets into the inner portion of the electrode assembly from the through holes, so the wetting efficiency of the electrolyte is improved. Further, the multiple transition connection portions are distributed in the circumferential direction of the current-collecting member, and each adjacent transition connection portion is spaced apart by the tab connection portion. As such, the through holes are uniformly distributed in the circumferential direction of the current-collecting member relatively. Through this setting, the uniformity of electrolyte wetting is further improved, and the performance and service life of the battery are thus enhanced.

In the secondary battery provided by an embodiment of the disclosure, the current-collecting member includes a plurality of tab connecting portions distributed in the circumferential direction. A transition connection portion is arranged between every two adjacent tab connecting portions. A maximum distance from an outer periphery of the transition connection portion to a center of the current-collecting member is R4, and the radius of the wound structure is R3, where R3>R4.

In the above technical solution, the distance from the farthest point of the outer periphery of the transition connection portion to the center of the first current-collecting member is less than a radius of the outer periphery of the wound structure. Through this setting, the blocking of the electrode assembly by the current-collecting member is further reduced, the wetting efficiency of the electrolyte is further improved, and the performance and service life of the battery are thus enhanced. In addition, the current-collecting member is further prevented from interfering with the installation of the electrode assembly into the casing, so that assembly efficiency and assembly quality are also improved.

In the secondary battery provided by an embodiment of the disclosure, the uncoated foil region further includes a second cut segment located at an outer periphery of the wound structure and adjacent to the uncut segment. In the radial direction of the electrode assembly, the second cut segment winds to form a fourth annular region, and a radius of an inner periphery of the fourth annular region is R5, where R4≤R5.

In the above technical solution, it can be achieved that the fourth annular region formed by winding the second cut segment is not blocked by the tab, and the fourth annular region is located at the outer periphery of the wound structure. Further, by limiting R4≤R5, that is, the distance from the farthest point of the outer periphery of the transition connection portion to the center of the first current-collecting member is less than or equal to the radius of the inner periphery of the fourth annular region, it can be achieved that a portion of the fourth annular region located at the radial outer side of the transition connection portion is also not blocked by the current-collecting member. Therefore, when electrolyte is injected from the first filling hole, the electrolyte directly flows into the portion of the fourth annular region that is exposed. During the flowing process, the electrolyte is directly absorbed by the separator of the fourth annular region and penetrates both in circumferential and radial directions to wet the electrode assembly. Through this arrangement, the wetting efficiency of the electrode assembly is improved. Further, the portion of the fourth annular region not covered by the current-collecting member distributes in the circumferential direction of the current-collecting member, so that the uniformity of electrolyte wetting in the radial direction of the electrode assembly is improved, and the performance and service life of the battery are enhanced.

In the secondary battery provided by an embodiment of the disclosure, in an axial direction of the current-collecting member, the current-collecting member covers at least a portion of the tab located at an outermost turn of the wound structure.

In the above technical solution, the tab located at the outermost turn of the wound structure is at least partially covered and pressed by the current-collecting member, so that the tab is effectively prevented from warping, and that the risk of short circuit caused by the tab breaking under an external force and falling into an inner portion of the casing is reduced.

In the secondary battery provided by an embodiment of the disclosure, R3-R4≥1mm.

In the above technical solution, by further limiting R3-R4≥1mm, it is achieved that the transition connection portion is able to cover and press as much of the tab at the outermost turn as possible, and it is also ensured that a large unblocked region of the electrode assembly is provided. In this way, the effect of both reducing the risk of the tab breaking under an external force and falling into the inner portion of the casing and improving the wetting efficiency of the electrolyte are achieved.

In the secondary battery provided by an embodiment of the disclosure, when projected in the axial direction of the electrode assembly toward the end surface of the wound structure, a projection of the first filling hole covers at least a portion of the third annular region covered by the projection of the second filling hole.

In the above technical solution, the projection of the first filling hole covers at least a portion of the third annular region covered by the projection of the second filling hole. It is achieved that the electrolyte directly flows into the portion of the third annular region that is not blocked by the tab and the current-collecting member when the electrolyte enters from the first filling hole, so that the electrolyte is directly absorbed by the separator of the third annular region and penetrate radially to wet the electrode assembly. Through this arrangement, the wetting efficiency of the electrode assembly is further improved.

The disclosure further provides a battery pack, and the battery pack includes the secondary battery according to any one of the above.

The disclosure further provides an electronic device, and the electronic device includes the aforementioned battery pack.

In the secondary battery provided by the disclosure, the first cut segment of the uncoated foil region is wound to form the first annular region, the uncut segment of the uncoated foil region is bent to form the tab, the region covered by the tab is the second annular region, and the first annular region includes the third annular region not covered by the second annular region. That is, the third annular region is exposed outside the second annular region without being blocked by the tab. Further, the projection of the second filling hole of the current-collecting member covers the third annular region. The projection of the second filling hole covering the third annular region is the portion of the third annular region exposed within the second filling hole. It is thus achieved that the third annular region is neither blocked by the tab nor blocked by the current-collecting member. Therefore, when the electrolyte is injected from the first filling hole, the electrolyte directly flows into the third annular region exposed within the second filling hole. Further, the electrolyte is directly absorbed by the separator of the third annular region and penetrates radially to wet the electrode assembly during the flowing process. Through this arrangement, the wetting efficiency of the electrode assembly is improved. Further, the third annular region is set around the winding axis of the wound structure, so that the uniformity of the electrolyte wetting the electrode assembly radially is improved, and the performance and service life of the battery are enhanced.

In addition, the current-collecting member and the tab are connected by welding. Since there is no tab on the third annular region, exposing the third annular region within the second filling hole effectively prevents miswelds to the third annular region when welding the current-collecting member and the tab, so the risk of burning the separator is reduced.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other embodiments can be obtained based on these drawings without inventive effort.
FIG. 1 is a structural schematic view of a secondary battery according to an embodiment of the disclosure.
FIG. 2 is a cross-sectional view of an electrode assembly of the secondary battery according to an embodiment of the disclosure.
FIG. 3 is a schematic exploded structural view of the electrode assembly and a first current-collecting member in the secondary battery according to an embodiment of the disclosure.
FIG. 4 is a local enlargement view of a portion A in FIG. 3.
FIG. 5 is a top view of the electrode assembly and the first current-collecting member in the secondary battery according to an embodiment of the disclosure.
FIG. 6 is a schematic structural view of a first uncoated foil region of the electrode assembly in the secondary battery according to an embodiment of the disclosure.
FIG. 7 is a schematic view of a battery pack according to an embodiment of the disclosure.
FIG. 8 is a schematic view of an electronic device according to an embodiment of the disclosure.

Description of reference numerals of the elements:
1: electronic device, 10: battery pack, 11: working portion, 101: box, 102: box cover, 100: secondary battery, 110: casing, 111: second end wall, 112: side wall, 113: opening, 114: first end wall, 115: first filling hole, 120: electrode assembly, 121: second electrode sheet, 1211: positive current collector, 1212: second coated region, 1213: second uncoated foil region, 122: separator, 123: first electrode sheet, 1231: negative current collector, 1232: first coated region, 1233: first uncoated foil region, 12331: first cut segment, 12332: uncut segment, 12333: second cut segment, 124: first tab, 1241: first annular region, 1242: second annular region, 1243: third annular region, 1244: fourth annular region, 125: second tab, 126: wound structure, 127: winding hole, 130: electrode post, 140: first current-collecting member, 141: tab connection portion, 142: transition connection portion, 143: second filling hole, 144: through hole, 145: casing connection portion, and 150: second current-collecting member.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the prior art by a person having ordinary skill in the art and the content of the disclosure. Any method, device, and material in the prior art similar or equivalent to the methods, devices, and materials described in the embodiments of the disclosure may also be used to implement the disclosure.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

A secondary battery includes a casing and an electrode assembly accommodated within the casing. The electrode assembly is a component where electrochemical reactions occur in the secondary battery. The casing may contain one or more electrode assemblies.

The electrode assembly is mainly formed by winding or laminating a positive electrode sheet and a negative electrode sheet, and a separator is usually provided between the positive electrode sheet and the negative electrode sheet. The positive electrode sheet includes a positive current collector and a positive active material, and the positive active material is coated on a surface of the positive current collector. The positive electrode current collector includes a coated region coated with an active material and an uncoated foil region uncoated with an active material, and the uncoated foil region forms a positive tab of the electrode assembly after winding. The negative electrode sheet includes a negative current collector and a negative active material, and the negative active material is coated on a surface of the negative current collector. The negative electrode current collector includes a coated region coated with an active material and an uncoated foil region uncoated with an active material, and the uncoated foil region forms a negative tab of the electrode assembly after winding. Taking a lithium-ion secondary battery as an example, a material of the positive current collector may be aluminum. A positive active material layer includes a positive active material, and the positive active material may be lithium cobalt oxide, lithium iron phosphate, ternary lithium, or lithium manganate. A material of the negative current collector may be copper. A negative active material layer includes a negative active material, and the negative active material may be carbon or silicon. A material of the separator may be polypropylene (PP) or polyethylene (PE), etc. In order to protect and insulate a cell, the cell may also be covered with an insulating film, and the insulating film may be made of PP, PE, PET, PVC, or other polymer materials.

The casing includes a first end wall and a second end wall set opposite to each other and a side wall surrounding the first end wall and the second end wall. One end of the side wall has an opening, and the electrode assembly may be assembled into the casing through the opening of the casing. A first filling hole is formed on the first end wall or the second end wall to allow electrolyte to be injected into the casing.

Tabs at both ends of the electrode assembly are connected to current-collecting members by welding. The current-collecting members enable optimized collection and distribution of a current from the electrode assembly, so that performance of the battery is improved.

However, the inventor found that when the electrolyte is injected, the current-collecting members may allow the electrolyte to penetrate into the electrode assembly, causing a certain degree of blocking. Further, the bent structure of the tabs also blocks the penetration of the electrolyte to a certain extent, as such, the efficiency of electrolyte wetting is reduced, the production efficiency of the battery is limited, and the performance of the battery is thus affected. Therefore, improving the wetting efficiency of the electrolyte is necessary and urgent.

In view of the above, the disclosure provides a technical solution. A first cut segment is arranged on a side of an uncoated foil region close to a winding axis and wound to form a first annular region including a third annular region not covered by a tab. Further, a projection of a second filling hole of a current-collecting member covers the third annular region. The third annular region covered by the projection of the second filling hole is the third annular region exposed within the second filling hole. The third annular region is neither blocked by the tab nor blocked by the current-collecting member. Therefore, when electrolyte is injected from a first filling hole, the electrolyte may be directly absorbed by a separator of the third annular region and penetrate radially to wet the electrode assembly during the flowing process, so that the wetting efficiency of the electrode assembly is improved.

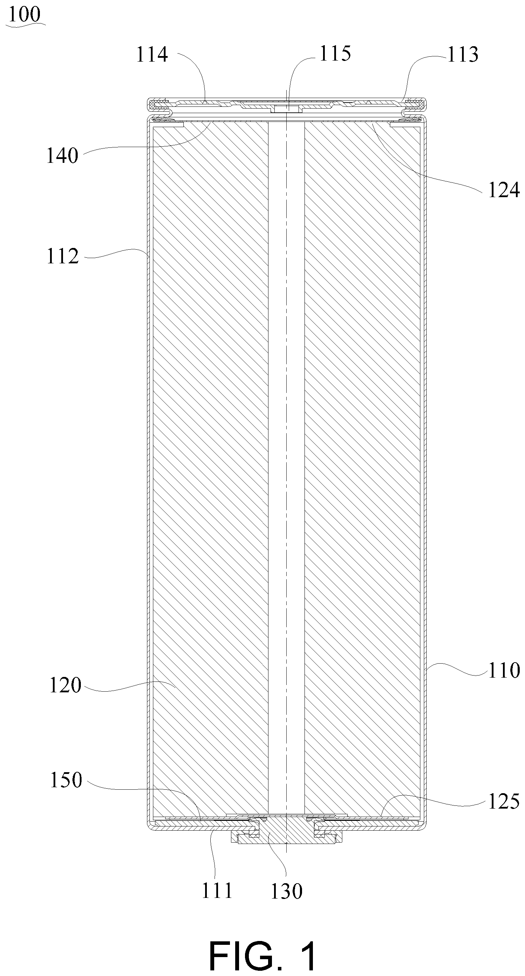

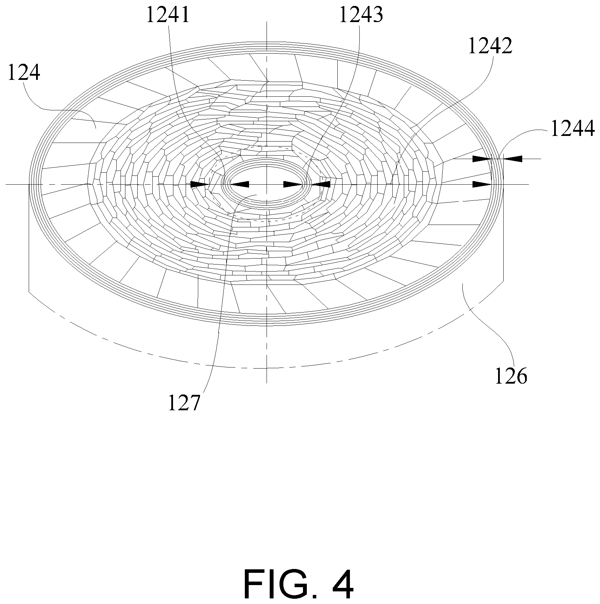

Referring to FIG. 1 to FIG. 8, the disclosure provides a secondary battery 100 including a casing 110, an electrode assembly 120, an electrode post 130, and a current-collecting member.

Referring to FIG. 1, the casing 110 includes an end wall, and a first filling hole 115 is arranged on the end wall. Specifically, in this embodiment, the casing 110 includes a first end wall 114 and a second end wall 111 set opposite to each other and a side wall 112 surrounding the first end wall 114 and the second end wall 111. The first filling hole 115 may be located on the first end wall 114 or on the second end wall 111. A shape of the first filling hole 115 may be circular, annular, petal-shaped, rectangular, elliptical, polygonal, or other irregular shapes. A sealing cover matched with the first filling hole 115 is also arranged thereon most of the time to seal the first filling hole 115 after filling is completed, which is not limited, as long as sealing and blocking of the first filling hole 115 may be achieved.

Referring to FIG. 1, as long as a stable sealing and electrical connection relationship can be formed, the connection between the first end wall 114 and the side wall 112 as well as between the second end wall 111 and the side wall 112 may be achieved in a variety of ways, such as integral stamping, integral casting, or separate welding. The surrounding of the side wall 112 is not limited and may be in the form of a circular cylinder shape or a prismatic cylinder shape, or the side wall 112 may also surround along any other closed-loop contour that can be matched with the first end wall 114 and the second end wall 111. As an embodiment, in this embodiment, outer edges of the first end wall 114 and the second end wall 111 are circular, and the side wall 112 surrounds cylindrically at the outer edges of the first end wall 114 and the second end wall 111. The second end wall 111 and the side wall 112 are integrally formed, and a circular opening 113 is formed at one end of the side wall 112 close to the first end wall 114. In some examples, electrolyte may be injected through the opening 113. An accommodating chamber is formed in the casing 110 surrounded by the second end wall 111 and the side wall 112 for accommodating the electrode assembly 120, the electrolyte, and other necessary battery components. Specifically, a diameter of the casing 110 may be determined according to a specific size of the electrode assembly 120, such as 18mm, 21mm, 46mm, etc. The casing 110 may be made of various materials, such as copper, iron, aluminum, steel, aluminum alloy, etc. In order to prevent the casing 110 from rusting during long-term use, a surface of the casing 110 may also be plated with a layer of anti-rust material such as metal nickel.

Referring to FIG. 1 to FIG. 2, the electrode assembly 120 is accommodated in the casing 110, and the electrode assembly 120 is a component in the secondary battery 100 where electrochemical reactions occur. One or more electrode assemblies 120 may be included within the casing 110. The electrode assembly 120 includes a first electrode sheet 123, a second electrode sheet 121, and a separator 122 stacked and wound to form a wound structure 126. The first electrode sheet 123 and the second electrode sheet 121 have opposite polarities. In some embodiments, the first electrode sheet 123 is a positive electrode sheet, and the second electrode sheet 121 is a negative electrode sheet. In some other embodiments, the first electrode sheet 123 is a negative electrode sheet, and the second electrode sheet 121 is a positive electrode sheet.

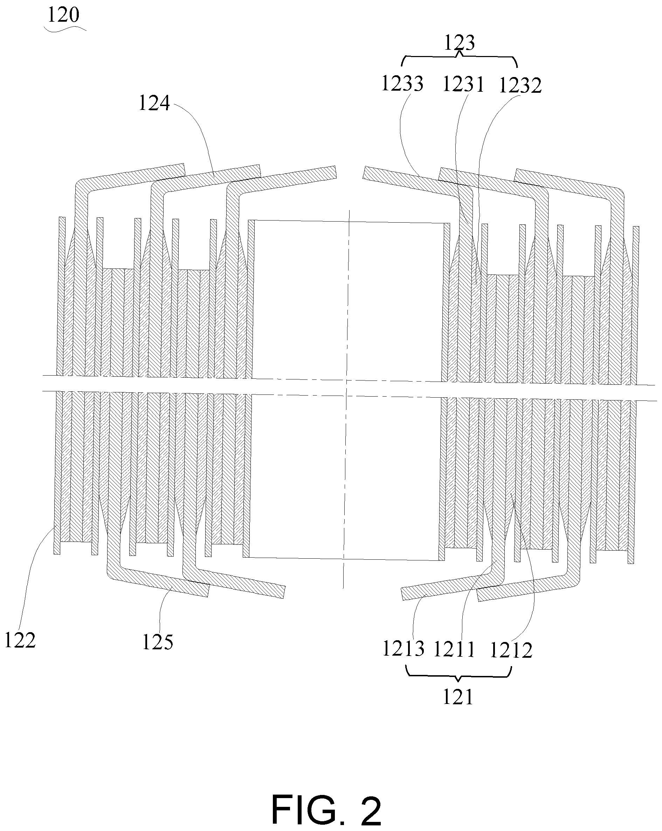

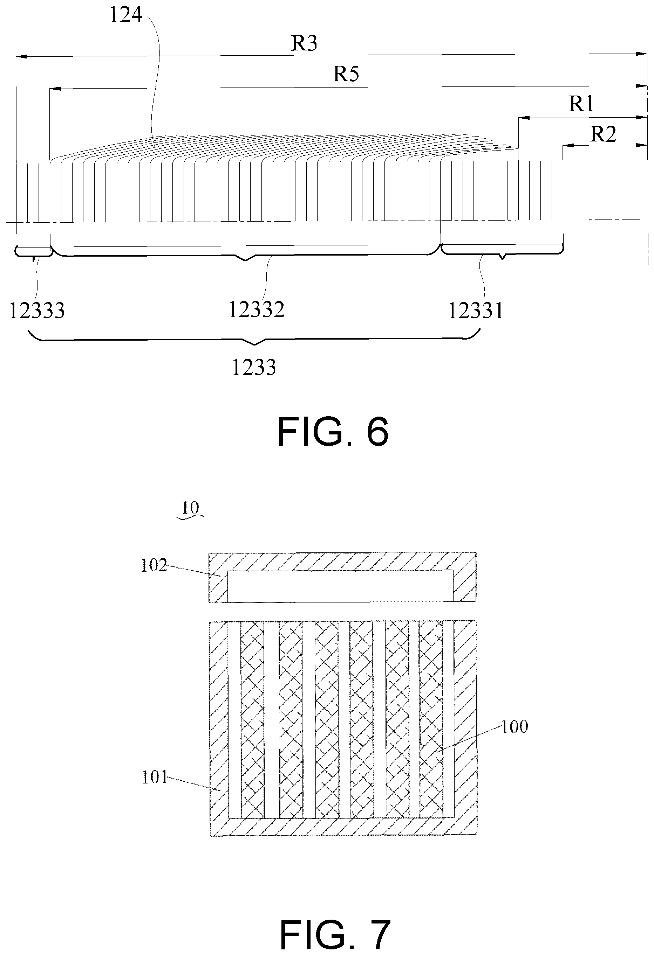

Referring to FIG. 2 and FIG. 6, in this embodiment, the first electrode sheet 123 is a negative electrode sheet and includes a negative current collector 1231 and a negative active material coated on a surface of the negative current collector 1231. The negative current collector 1231 includes a first coated region 1232 coated with an active material and an uncoated foil region not coated with an active material. For ease of distinction, the uncoated foil region on the first electrode sheet 123 is defined as a first uncoated foil region 1233. The first uncoated foil region 1233 extends out of the separator 122 in an axial direction of the electrode assembly 120, is located at an end portion of the first electrode sheet 123, and includes a first cut segment 12331 close to a winding axis of the wound structure 126 and an uncut segment 12332 located radially outside the first cut segment 12331. The uncut segment 12332 of the first uncoated foil region 1233 is bent to form a tab. For ease of distinction, the tab on the first electrode sheet 123 is defined as a first tab 124, and the first tab 124 is a corresponding negative tab. In a radial direction of the electrode assembly 120, the first cut segment 12331 winds to form a first annular region 1241, a region covered by the tab is a second annular region 1242, and the first annular region 1241 includes a third annular region 1243 not covered by the second annular region 1242.

Through the arrangement of the first cut segment 12331, on one hand, the situation of interference occurring near the winding axis when the first uncoated foil region 1233 is bent may be alleviated. On the other hand, the first annular region 1241 includes the third annular region 1243 not covered by the second annular region 1242, that is, the third annular region 1243 is exposed outside the second annular region 1242 without being blocked by the tab. In this way, the electrolyte may be directly absorbed by the separator 122 of the third annular region 1243 and penetrate radially to wet the electrode assembly 120 during the flowing process, so the wetting efficiency of the electrode assembly 120 may be improved through this arrangement.

Referring to FIG. 2 and FIG. 6, the second electrode sheet 121 is a positive electrode sheet. Specifically, the second electrode sheet 121 includes a positive current collector 1211 and a positive active material, and the positive active material is coated on a surface of the positive current collector 1211. The positive current collector 1211 includes a second coated region 1212 coated with an active material and a second uncoated foil region 1213 not coated with an active material, and the second uncoated foil region 1213 is located at an end portion of the second electrode sheet 121. The second uncoated foil region 1213 extends out of the separator 122 along the other axial end of the electrode assembly 120 and is bent toward the winding axis to form a second tab 125, and the second tab 125 is a corresponding positive tab. It should be noted that each of the second uncoated foil region 1213 and the first uncoated foil region 1233 may be provided with the first cut segment 12331, or the first cut segment 12331 may be arranged only on one of the first uncoated foil region 1233 and the second uncoated foil region 1213 that is close to an electrolyte inflow end, which is not limited.

Referring to FIG. 1 to FIG. 2, the separator 122 is arranged between the first electrode sheet 121 and the second electrode sheet 123 to isolate a positive active material layer from a negative active material layer. Taking a lithium-ion secondary battery 100 as an example, a material of the positive current collector 1211 may be aluminum, and the positive active material layer includes a positive active material, which may be lithium cobalt oxide, lithium iron phosphate, ternary lithium, or lithium manganese oxide, etc. A material of the negative current collector 1231 may be copper, and the negative active material layer includes a negative active material, which may be carbon or silicon, etc. A base material of the separator 122 may be polypropylene (abbreviated as PP) or polyethylene (abbreviated as PE), etc. In order to protect and insulate a cell, the cell may also be covered with an insulating film, and the insulating film may be made of, for example, PP, PE, polyethylene terephthalate (abbreviated as PET), polyvinyl chloride (abbreviated as PVC), or other polymer materials.

Referring to FIG.1 and FIG.2, further, the first tab 124 faces the first end wall 114 or faces the second end wall 111, then the second tab 125 faces the other end of the casing 110. In this embodiment, the second tab 125 faces the second end wall 111 and is electrically connected to the electrode post 130 to make the electrode post 130 positively charged. The first tab 124 faces the first end wall 114, and the casing 110 is electrically connected to the first tab 124 and thus is negatively charged. However, in other embodiments, the first tab 124 may also be connected to the electrode post 130, and the second tab 125 may be connected to the casing 110.

Referring to FIG. 1 and FIG. 2, further, current-collecting members are arranged between the electrode assembly 120 and the end wall and are to the tabs by welding. For convenience of distinction and understanding, the current-collecting member electrically connected to the first tab 124 is named as a first current-collecting member 140, and the current-collecting member electrically connected to the second tab 125 is named as a second current-collecting member 150. The welding method may adopt ultrasonic welding, resistance welding, laser welding, etc., which is not limited. In this embodiment, the first current-collecting member 140 is located between the first end wall 114 and the first tab 124. The first tab 124 is a negative tab, so a s material of the first current-collecting member 140 is preferably copper metal. The second current-collecting member 150 is located between the second end wall 111 and the second tab 125. The second tab 125 is a positive tab, so a material of the second current-collecting member 150 is preferably aluminum metal. It should be noted that shapes of the first current-collecting member 140 and the second current-collecting member 150 may be any rotationally symmetric shapes, for example, may be circular, square, regular polygon, petal-shaped, or other graphic shapes having a symmetric center and capable of overlapping with the original shape after rotating around the symmetric center by a certain angle, which is not limited, as long as a stable and reliable electrical connection relationship can be achieved. Centers of the first current-collecting member 140 and the second current-collecting member 150 are their own symmetric centers. To improve the positioning, processing convenience, interchangeability, and uniformity of the current-collecting members during the installation process, in this embodiment, the first current-collecting member 140 and the second current-collecting member 150 both adopt a circular structure.

Referring to FIG. 1 and FIG. 2, the electrode post 130 passes through the second end wall 111 and is insulated from the second end wall 111. A structural form of the electrode post 130 may be any suitable form capable of passing through the second end wall 111 and being electrically connected to the first electrode sheet 123 or the second electrode sheet 121, for example, a cross section may be circular, square, or prismatic, or may be an irregular contour to allow stable conduction to be achieved. One end of the electrode post 130 facing the electrode assembly 120 passes through the second end wall 111 and is electrically connected to the first tab 124 or the second tab 125 directly or is electrically connected through indirect transferring. For instance, the electrode post 130 may be electrically connected to the second electrode sheet 121 through transferring through the current-collecting member. One end of the electrode post 130 away from the electrode assembly 120 is exposed to the outside of the casing 110 to form a corresponding electrode. The electrical property of the electrode post 130 may be positive or negative. For instance, in an embodiment, the electrode post 130 is electrically connected to the second electrode sheet 121, and the polarity of the second electrode sheet 121 is positive, then the electrode post 130 is positive, and the casing 110 forms a corresponding negative electrode. In another example, the polarity of the second electrode sheet 121 is negative, then the electrode post 130 is negative, and the casing 110 forms a corresponding positive electrode. In this embodiment, the second end wall 111 is provided with an installation hole of the electrode post 130, and the electrode post 130 is sealingly and insulatingly fitted in the installation hole of the electrode post 130. The electrode post 130 is electrically connected to the second tab 125 through transferring through the second current-collecting member 150, and one end of the electrode post 130 away from the electrode assembly 120 is exposed to the outside of the casing 110 and is positively charged.

The electrode post 130 is made of a conductive metal material. A material of the electrode post 130 may be aluminum. If the material of the electrode post 130 is aluminum, then a riveting process may be easily performed. In this embodiment, the material of the electrode post 130 is aluminum, and the polarity is positive, corresponding to the electrode post 130. A material of the casing 110 is low carbon steel, and a negative electrode is correspondingly formed. The electrode post 130 is electrically insulated from the casing 110. Electrical insulation between the electrode post 130 and the second end wall 111 of the casing 110 may be achieved in various ways. For instance, insulation may be achieved by placing an insulating washer between the electrode post 130 and the second end wall 111. Alternatively, insulation may be achieved by forming an insulating coating layer on a portion of the electrode post 130. Alternatively, some of the above methods may be applied in combination.

In this embodiment, the electrode assembly 120 is electrically connected to the casing 110 through the first current-collecting member 140. Further, in some embodiments, the first current-collecting member 140 includes a casing connection portion 145 located at an outer periphery of the first current-collecting member 140, and the casing connection portion 145 is connected to the side wall 112 by welding. The specific assembly process of this structure is that the casing connection portion 145 is first connected to the side wall 112 by welding, and then a rolling groove is rolled on the side wall 112. Meanwhile, the casing connection portion 145 connected to the side wall 112 by welding continues to bend toward an axis of the casing 110, and then the first end wall 114 is placed on the side of the rolling groove away from the first current-collecting member 140 and is connected to the side wall 112 to seal the opening 113. Mechanical sealing is adopted as the installation method of the first end wall 114 to seal and block the opening 113. In some other examples, the first end wall 114 seals and blocks the opening 113, and an outer edge shape of the first end wall 114 corresponds to a shape of the opening 113. The outer edge of the first end wall 114 is connected to the side wall 112 by welding and seals the opening 113, and the first current-collecting member 140 is connected to the first end wall 114 by welding. In this embodiment, the first tab 124 is a negative tab, the first current-collecting member 140 is connected to the side wall 112 by welding to make the casing 110 negatively charged.

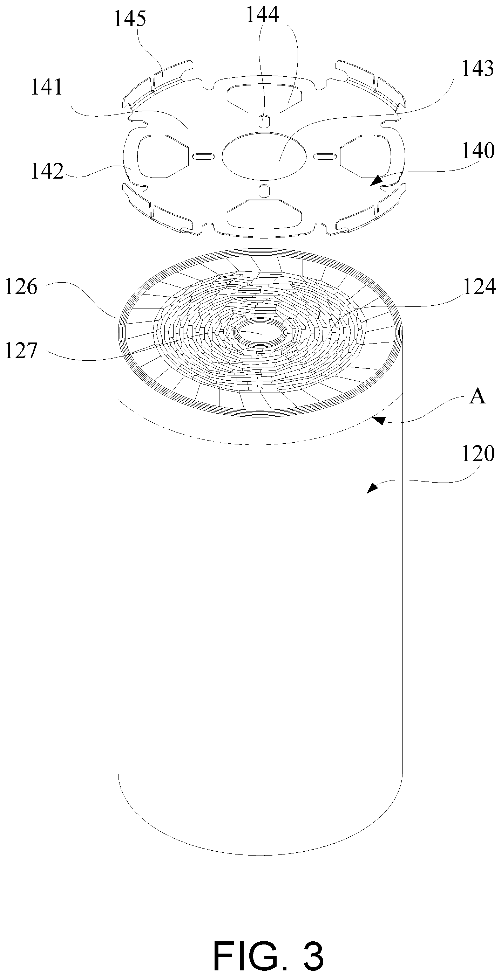

Further, referring to FIG. 1 and FIG. 3, in this embodiment, the first filling hole 115 is arranged on the first end wall 114, and the first current-collecting member 140 includes a second filling hole 143. A shape of the second filling hole 143 may be circular, annular, petal-shaped, rectangular, elliptical, polygonal, or other irregular shapes. A position of the second filling hole 143 on the first current-collecting member 140 is not limited, it may be a rotationally symmetric pattern with the center of the first current-collecting member 140 as the symmetric center, or may be irregularly arranged. This is not limited. The second filling hole 143 in this embodiment is a circular center hole passing through the first current-collecting member 140 in a thickness direction. In some other embodiments, the first filling hole 115 is arranged on the second end wall 111, and the second current-collecting member 150 includes the second filling hole 143. It should be noted that the following embodiments are all described with the first current-collecting member 140 as an example, but the following technical solutions are equally applicable to the second current-collecting member 150, and the same technical effects will be obtained. Description thereof is thus not repeated herein.

Referring to FIG. 1 and FIG. 3 to FIG. 6, in order to enable the electrolyte to be better absorbed by the separator 122 of the third annular region 1243 directly during the flow process, further, a projection is made in the axial direction of the electrode assembly 120 toward an end surface of the wound structure 126. A projection of the second filling hole 143 covers the third annular region 1243, that is, the third annular region 1243 is exposed within the second filling hole 143. In this way, it may be achieved that the third annular region 1243 is neither blocked by the first tab 124 nor blocked by the first current-collecting member 140. Therefore, when electrolyte is injected from the first filling hole 115, the electrolyte directly flows into the third annular region 1243 exposed within the second filling hole 143, and the electrolyte may be directly absorbed by the separator 122 of the third annular region 1243 during the flow process and penetrate radially to wet the electrode assembly 120. Through this arrangement, the wetting efficiency of the electrode assembly 120 is improved. Meanwhile, the third annular region 1243 is set around the winding axis of the wound structure 126, so that the uniformity of the electrolyte wetting the electrode assembly 120 radially may be improved, and the performance and service life of the battery are enhanced.

In addition, the first current-collecting member 140 and the first tab 124 are connected by welding. Since there is no first tab 124 on the third annular region 1243, exposing the third annular region 1243 within the second filling hole 143 may effectively prevent miswelds to the third annular region 1243 when welding the first current-collecting member 140 and the first tab 124, so the risk of burning the separator 122 is reduced.

Further, in one embodiment of the secondary battery 100 of the disclosure, the projection of the second filling hole 143 covers the first annular region 1241. The first annular region 1241 is formed by winding the first cut segment 12331. Although part of the first annular region 1241 after cutting is covered by the first tab 124, compared to the uncut segment 12332, it is still convenient for the electrolyte to flow into the region covered by the first tab 124. The electrolyte may flow from a slit between the first tab 124 and the first annular region 1241. Further, the electrolyte may be directly absorbed by the separator 122 of the first annular region 1241 and penetrate radially to wet the electrode assembly 120 during the flowing process. This arrangement achieves that the first annular region 1241 is entirely exposed within the second filling hole 143, so that the wetting efficiency of the electrode assembly 120 may be further improved. Meanwhile, stacking layers of the first tab 124 in the portion where the first annular region 1241 is covered by the first tab 124 are fewer, which is not suitable for welding to the first current-collecting member 140. Therefore, the first annular region 1241 being entirely exposed within the second filling hole 143 may effectively prevent miswelds to the region where the first tab 124 has fewer stacking layers when welding the first current-collecting member 140 and the first tab 124, so the risk of welding through the first tab 124 and burning the separator 122 is reduced.

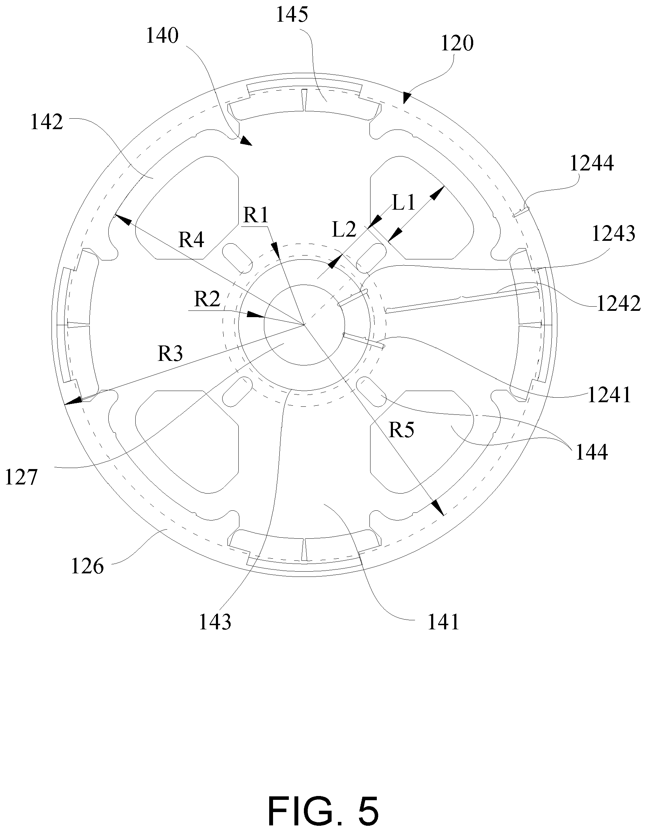

Referring to FIG. 5 and FIG. 6, in the secondary battery 100 provided by an embodiment of the disclosure, an inner radius of the second annular region 1242 is R1, the wound structure 126 includes a winding hole 127 located at a center, and a radius of the winding hole 127 is R2, wherein R1-R2≥1mm, for example, may be 1mm, 1.2mm, 1.5mm, 1.8mm, 2mm, etc. An inner circle of the second annular region 1242 is an inner circle of the region covered by the first tab 124. The limitation of R1-R2≥1mm may achieve that there is an annular region with a width of at least 1mm on an outer periphery of the winding hole 127 that is not blocked by the first tab 124, and the annular region is the third annular region 1243. This arrangement may ensure that the width of the third annular region 1243 is not less than 1mm, so that the wetting efficiency of the electrode assembly 120 is further improved, and the performance and service life of the battery are enhanced.

Referring to FIG. 3, FIG. 5, and FIG. 6, in the secondary battery 100 provided by an embodiment of the disclosure, when projected in the axial direction of the electrode assembly 120 toward the end surface of the wound structure, a projection area of the first current-collecting member 140 is S1, an end surface area of the wound structure 126 is S2, where 0.9S2≥S1≥0.4S2, for example, may be 0.9S2, 0.8S2, 0.6S2, or 0.4S2, etc. The setting of S1≥0.4S2 may achieve that the first current-collecting member 140 has a sufficiently large area to be connected to the first tab 124 by welding, so as to improve the firmness and reliability of welding between the first current-collecting member 140 and the electrode assembly 120 as well as the effect of reducing the internal resistance of the battery. The setting of S1<0.9S2 may ensure that the electrode assembly 120 has an area greater than or equal to 0.1S2 that is not blocked by the first current-collecting member 140 and is exposed. Through this setting, on the one hand, the electrolyte may smoothly penetrate into the electrode assembly 120 through the unblocked portions, and on the other hand, gas in an inner portion the electrode assembly 120 can be discharged from the unblocked region. Therefore, the safety performance and comprehensive performance of the battery are improved.

Referring to FIG. 3 and FIG. 5, in the secondary battery 100 provided by an embodiment of the disclosure, the first current-collecting member 140 includes a plurality of tab connecting portions 141 distributed in the circumferential direction, and each tab connection portion 141 is a region where the first current-collecting member 140 and the first tab 124 are connected by welding. The number of tab connecting portions 141 may be 2, 3, 4, or more, which is not limited herein. A transition connection portion 142 is arranged between every two adjacent tab connecting portions 141. The transition connection portion 142 connects the adjacent tab connecting portions 141, so the first current-collecting member 140 may exhibit good integrity, and assembly and welding may be easily performed.

Referring to FIG. 5 and FIG. 6, further, at least one through hole 144 is arranged on each transition connection portion 142. In the radial direction of the first current-collecting member 140, a maximum width of the through hole 144 is L. A plurality of rays are made through the center of the first current-collecting member 140. Among the above rays, one that intersects with the through hole 144 to form the maximum width is selected, the corresponding width of the through hole 144 is the maximum width of the through hole 144, and a radius of the wound structure 126 is R3, where L≥0.5×(R3-R2), for example, may be 0.5×(R3-R2), 0.55×(R3-R2), 0.6×(R3-R2) or 0.65×(R3-R2), etc. The at least one through hole 144 arranged on the transition connection portion 142 may be 1 or multiple. For instance, in this embodiment, each transition connection portion 142 is provided with two through holes 144, and the above through holes 144 are the portions on the first current-collecting member 140 that do not block the electrode assembly 120. A maximum width of the larger waist-shaped hole is shown by L1, a maximum width of the smaller elliptical hole is shown by L2, and L is the sum of L1 and L2. R3-R2 corresponds to a ring width of the end surface of the wound structure 126, and L≥0.5×(R3-R2) is further limited. That is, the maximum value of the width of 1 through hole 144 or the sum of widths of multiple through holes 144 on the same transition connection portion 142 is not less than 0.5 times the ring width of the end surface of the wound structure 126. Through this setting, it may be achieved that the electrolyte wets into the inner portion of the electrode assembly 120 from the through holes 144, so the wetting efficiency of the electrolyte is improved. Meanwhile, the multiple transition connection portions 142 are distributed in the circumferential direction of the first current-collecting member 140, and each adjacent transition connection portion 142 is spaced apart by the tab connection portion 141. As such, the through holes 144 may be uniformly distributed in the circumferential direction of the first current-collecting member 140 relatively. Through this setting, the uniformity of electrolyte wetting may be further improved, and the performance and service life of the battery are thus enhanced.

Referring to FIG. 5 and FIG. 6, in the secondary battery 100 provided by an embodiment of the disclosure, a maximum distance from an outer periphery of the transition connection portion 142 to the center of the first current-collecting member 140 is R4. Since a shape of the outer periphery of the transition connection portion 142 is not limited, it may be circular, polygonal, petal-shaped, or a shape with a recess arranged on the outer periphery of the circle, etc. Therefore, R4 is the distance from the farthest point of the outer periphery of the transition connection portion 142 to the center of the first current-collecting member 140. The radius of the wound structure 126 is R3, and preferably, R3>R4. That is, the distance from the farthest point of the outer periphery of the transition connection portion 142 to the center of the first current-collecting member 140 is less than a radius of the outer periphery of the wound structure 126. Through this setting, the blocking of the electrode assembly 120 by the first current-collecting member 140 may be further reduced, the wetting efficiency of the electrolyte is further improved, and the performance and service life of the battery are thus enhanced. In addition, the first current-collecting member 140 may be further prevented from interfering with the installation of the electrode assembly 120 into the casing 110, so that assembly efficiency and assembly quality are also improved.

Referring to FIG. 5 and FIG. 6, in the secondary battery 100 provided by an embodiment of the disclosure, the first uncoated foil region 1233 further includes a second cut segment 12333 located at the outer periphery of the wound structure 126 and adjacent to the uncut segment 12332. In the radial direction of the electrode assembly 120, the second cut segment 12333 winds to form a fourth annular region 1244, and a radius of an inner periphery of the fourth annular region 1244 is R5, preferably, R4≤R5.In this technical solution, the fourth annular region 1244 formed by winding the second cut segment 12333 is not blocked by the first tab 124, and the fourth annular region 1244 is located at the outer periphery of the wound structure 126. Meanwhile, by limiting R4≤R5, that is, the distance from the farthest point of the outer periphery of the transition connection portion 142 to the center of the first current-collecting member 140 is less than or equal to the radius of the inner periphery of the fourth annular region 1244, it may be achieved that a portion of the fourth annular region 1244 located at the radial outer side of the transition connection portion 142 is also not blocked by the first current-collecting member 140. Therefore, when electrolyte is injected from the first filling hole 115, the electrolyte directly flows into the portion of the fourth annular region 1244 that is exposed. During the flowing process, the electrolyte may be directly absorbed by the separator 122 of the fourth annular region 1244 and penetrate both in circumferential and radial directions to wet the electrode assembly 120. Through this arrangement, the wetting efficiency of the electrode assembly 120 may be improved. Further, the portion of the fourth annular region 1244 not covered by the first current-collecting member 140 distributes in the circumferential direction of the first current-collecting member 140, so that the uniformity of electrolyte wetting in the radial direction of the electrode assembly 120 may be improved, and the performance and service life of the battery are enhanced.

Referring to FIG. 3, considering that the first tab 124 located at an outermost turn is in a free state and has a risk of breaking and falling off, in the secondary battery 100 provided by an embodiment of the disclosure, in the axial direction of the first current-collecting member 140, the first current-collecting member 140 at least covers a portion of the first tab 124 located at the outermost turn of the wound structure 126. The first tab 124 located at the outermost turn of the wound structure 126 may be at least partially covered and pressed by the first current-collecting member 140, so that the first tab 124 may be effectively prevented from warping, and that the risk of short circuit caused by the first tab 124 breaking under an external force and falling into an inner portion of the casing 110 is reduced.

Referring to FIG. 5 and FIG. 6, in the secondary battery 100 provided by an embodiment of the disclosure, it is further limited that R3-R4≥1mm, for example, it may be 1mm, 2mm, 3mm, etc. That is, a difference between the radius of the wound structure 126 and a shortest distance from the outer periphery of the transition connection portion 142 to the center of the first current-collecting member 140 is limited to be greater than or equal to 1mm. It may be achieved that the transition connection portion 142 is able to cover and press as much of the first tab 124 at the outermost turn as possible, and it may also be ensured that a large unblocked region of the electrode assembly 120 is provided. In this way, the effect of both reducing the risk of the first tab 124 breaking under an external force and falling into the inner portion of the casing 110 and improving the wetting efficiency of the electrolyte may be achieved.

Referring to FIG. 1 and FIG. 5, in the secondary battery 100 provided by an embodiment of the disclosure, when projected in the axial direction of the electrode assembly 120 toward the end surface of the wound structure 126, a projection of the first filling hole 115 covers at least a portion of the third annular region 1243 covered by the projection of the second filling hole 143. It may thus be achieved that the electrolyte directly flows into the portion of the third annular region 1243 that is not blocked by the first tab 124 and the first current-collecting member 140 when the electrolyte enters from the first filling hole 115, so that the electrolyte may be directly absorbed by the separator 122 of the third annular region 1243 and penetrate radially to wet the electrode assembly 120. Through this arrangement, the wetting efficiency of the electrode assembly 120 may be further improved.

Referring to FIG. 7, the disclosure further provides a battery pack 10 including the secondary battery 100 according to any one of the above. In the battery pack 10 provided by an embodiment of the disclosure, the battery pack 100 includes a box 101, a box cover 102, and a plurality of secondary batteries 100. The plurality of secondary batteries 100 are placed in the box 101 and are connected in series, in parallel, or in a mixed manner of series and parallel. The box cover 102 covers the box 101 to protect the secondary batteries 100. It should be noted that in addition to the secondary battery 100 provided by the disclosure, the battery pack 10 may also include a thermal management system of the battery pack 10, a circuit board, and other parts. The battery pack 10 may be a battery pack, a battery pack, an energy storage cabinet, etc., and description thereof is not provided herein.

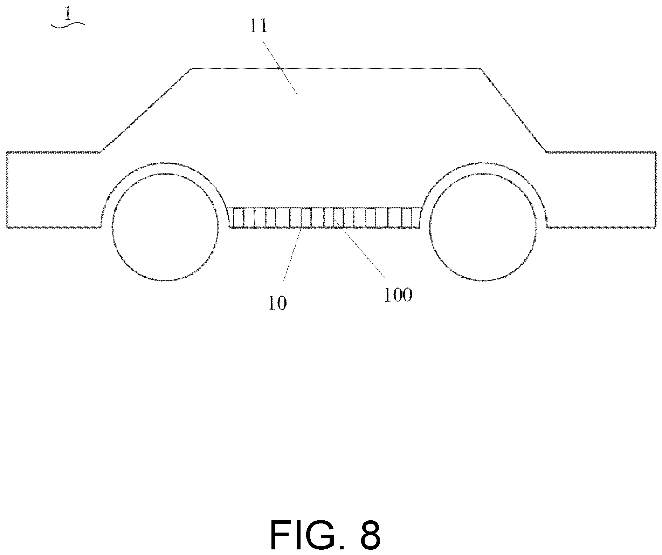

Referring to FIG. 8, the disclosure further provides an electronic device 1 including the aforementioned battery pack 10. A working portion 11 is electrically connected to the battery pack 10 to obtain power support. As an embodiment, the electronic device 1 is a vehicle. The vehicle may be a fuel vehicle, a gas vehicle, or a new energy vehicle, and the new energy vehicle may be a pure electric vehicle, a hybrid vehicle, or a range-extended vehicle, etc., which is not limited herein. The working portion 11 is a vehicle body, and the battery pack 10 is arranged at the bottom of the vehicle body and provides electrical energy support for the driving of the vehicle or the operation of electrical components in the vehicle. However, in other embodiments, the electronic device 1 may be a mobile phone, a portable apparatus, a notebook computer, a ship, a spacecraft, an electric toy, an electric tool, etc. The spacecraft includes but not limited to an airplane, a rocket, a space shuttle, a spaceship, etc. The working portion 11 may be a unit component capable of obtaining the electric energy of the battery pack 10 and performing corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic device 1 is not particularly limited in the embodiments of the disclosure.

In the secondary battery provided by the disclosure, the first cut segment is arranged on the side of the uncoated foil region close to the winding axis and winds to form the first annular region, and the first annular region includes the third annular region not covered by the tab. Further, the projection of the second filling hole of the current-collecting member covers at least a portion of the third annular region, and the portion of the third annular region covered by the projection of the second filling hole is the portion exposed within the second filling hole. This portion of the third annular region is neither blocked by the tab nor blocked by the current-collecting member. Therefore, when electrolyte is injected from the first filling hole, the electrolyte may be directly absorbed by the separator of the third annular region during the flowing process and penetrate radially to wet the electrode assembly, so that the wetting efficiency of the electrode assembly is improved. Therefore, some practical problems in the related art are effectively overcome, and that the disclosure exhibits high utilization value and use significance.

It should be noted that in the disclosure, the uncut segment involved refers to no cutting being performed in the extension direction of the tab away from the coated region of the active material.

## Claims

1. A secondary battery (100), comprising:
a casing (110) comprising an end wall (111), wherein a first filling hole (115) is arranged on the end wall (111);
an electrode assembly (120) accommodated in the casing (110) and comprising a first electrode sheet (123), a second electrode sheet (121), and a separator (122) stacked and wound to form a wound structure (126), wherein an end portion of the first electrode sheet (123) comprises an uncoated foil region (1233) extending from the separator (122) in an axial direction of the electrode assembly (120), the uncoated foil region (1233) comprises a first cut segment (12331) close to a winding axis of the wound structure (126) and an uncut segment (12332) located radially outside the first cut segment (12331), the uncut segment (12332) of the uncoated foil region (1233) is bent to form a tab (124), in a radial direction of the electrode assembly (120), the first cut segment (12331) is wound to form a first annular region (1241), a region covered by the tab (124) is a second annular region (1242), and the first annular region (1241) comprises a third annular region (1243) not covered by the second annular region (1242); and
a current-collecting member (140) arranged between the electrode assembly (120) and the end wall (111), connected to the tab (124) by welding, and comprising a second filling hole (143),
wherein when projected in the axial direction of the electrode assembly (120) toward an end surface of the wound structure (126), a projection of the second filling hole (143) covers the third annular region (1243).

2. The secondary battery (100) according to claim 1, wherein the projection of the second filling hole (143) covers the first annular region (1241).

3. The secondary battery (100) according to claim 1 or 2, wherein an inner radius of the second annular region (1242) is R1, the wound structure (126) comprises a winding hole (127) located at a center, and a radius of the winding hole (127) is R2, wherein R1-R2≥1mm.

4. The secondary battery (100) according to any one of claims 1 to 3, wherein when projected in the axial direction of the electrode assembly (120) toward the end surface of the wound structure (126), a projection area of the current-collecting member (140) is S1, and an end surface area of the wound structure (126) is S2, where 0.9S2≥S1≥0.4S2.

5. The secondary battery (100) according to any one of claims 1 to 4, wherein the current-collecting member (140) comprises a plurality of tab connecting portions (141) distributed in a circumferential direction, a transition connection portion (142) is arranged between every two adjacent tab connecting portions (141), at least one through hole (144) is arranged on each transition connection portion (142), in a radial direction of the current-collecting member (140), a maximum width of the at least one through hole (144) is L, and a radius of the wound structure (126) is R3, where L≥0.5×(R3-R2).

6. The secondary battery (100) according to any one of claims 1 to 5, wherein the current-collecting member (140) comprises a plurality of tab connecting portions (141) distributed in a circumferential direction, a transition connection portion (142) is arranged between every two adjacent tab connecting portions (141), a maximum distance from an outer periphery of the transition connection portion (142) to a center of the current-collecting member (140) is R4, and a radius of the wound structure (126) is R3, where R3>R4.

7. The secondary battery (100) according to any one of claims 1 to 6, wherein the uncoated foil region (1233) further comprises a second cut segment (12333) located at an outer periphery of the wound structure (126) and adjacent to the uncut segment (12332), in the radial direction of the electrode assembly (120), the second cut segment (12333) winds to form a fourth annular region (1244), and a radius of an inner periphery of the fourth annular region (1244) is R5, where R4≤R5.

8. The secondary battery (100) according to any one of claims 1 to 7, wherein in an axial direction of the current-collecting member (140), the current-collecting member (140) covers at least a portion of the tab (124) located at an outermost turn of the wound structure (126).

9. The secondary battery (100) according to any one of claims 1 to 8, wherein R3-R4≥1mm.

10. The secondary battery (100) according to any one of claims 1 to 6, wherein when projected in the axial direction of the electrode assembly (120) toward the end surface of the wound structure (126), a projection of the first filling hole (115) covers at least a portion of the third annular region (1243) covered by the projection of the second filling hole (143).

11. The secondary battery (100) according to any one of claims 1 to 10, wherein the uncut segment (12332) of the uncoated foil region (1233) is bent toward a center of the electrode assembly (120) to form the tab (124).

12. A battery pack (10), comprising the secondary battery (100) according to any one of claims 1 to 10.

13. An electronic device (1), comprising the battery pack (10) according to claim 11.
